(19) Europäisches Patentamt
European Patent Office
Office européen des brevets

(11) Publication number: 0 140 179 A2

(12) # EUROPEAN PATENT APPLICATION

(21) Application number: 84111650.2

(22) Date of filing: 28.09.84

(51) Int. Cl.⁴: C 10 M 159/18
F 16 B 33/06
//F16N15/00, (C10N10/16, 40:00, 40:10, 50:02)

(30) Priority: 03.11.83 PT 77615

(43) Date of publication of application: 08.05.85 Bulletin 85/19

(84) Designated Contracting States: AT BE DE FR GB IT LU NL

(71) Applicant: De Sacadura Bretes, Manuel
Alameda das Linhas de Torres No. 256 - 4. Esq.
P-1700 Lisboa(PT)

(72) Inventor: De Sacadura Bretes, Manuel
Alameda das Linhas de Torres No. 256 - 4. Esq.
P-1700 Lisboa(PT)

(74) Representative: Weickmann, Heinrich, Dipl.-Ing. et al,
Patentanwälte Dipl.-Ing. H.Weickmann Dipl.-Phys.Dr. K.Fincke Dipl.-Ing. F.A.Weickmann Dipl.-Chem. B. Huber Dr.-Ing. H. Liska Dipl.-Phys.Dr. J. Prechtel Möhlstrasse 22
D-8000 München 80(DE)

(54) **Lubricating process.**

(57) A process is described for lubricating iron and normal or non-inoxidable steel screws and screw-nuts for fixing any kind of material, especially structures made of ferrous metals, characterized in that together with lubrication passivation and consequent protection against direct contact with the ambient atmosphere and inherent oxidation and corrosion of the thread's or screw's surface and simultaneously conversion of rust is attained by conversion of the rust into an irreversible complex compound that will be integrated in the ferrous surface. Particularly a lubricating formulation is used which comprises a semi-aqueous emulsifying composition containing at least five per cent by weight, based on the total formulation, of a tannin complex compound.

EP 0 140 179 A2

Croydon Printing Company Ltd.

EU 550

Manuel De Sacadura Bretes
Alameda das Linhas de Torres, No. 256 - 4° Esq.
1700 Lisboa, Portugal

---

# Lubricating Process

---

The invention resides in a process for lubricating iron and normal or non-inoxidable steel screws and screw-nuts for fixing any kind of material, especially made of ferrous metals.

Atmospheric and weather influences especially in the form of atmospheric moisture, combined with oxygen and materials of pollution are the main factors of corrosion of ferrous surfaces, e. g. of screws and screw-nuts. This corrosion, especially oxidation and rust formation on the surfaces, can cause the so-called "binding" of the threads and nuts, which makes it very difficult and often impossible to remove the screws without destruction or severe damage of the parts which are fixed together.

This problem can be solved by the use of stainless steel screws and screw-nuts; but materials, which are completely resistant against corrosion are not easy to obtain and are very expensive.

The purpose of the present invention is therefore to provide a process for lubricating and protecting iron and normal or non-inoxidable steel screws and screw-nuts against corrosion, which can overcome the disadvantages of the prior art. This purpose is solved by the present invention.

Subject of the present invention is a process for lubricating iron and normal or non-inoxidable steel screws and screw-nuts for fixing any kind of material, especially structures made of ferrous metals, characterized in that together with lubrication passivation and consequent protection against direct contact with the ambient atmosphere and inherent oxidation and corrosion of the thread's or screw's surface and simultanteously conversion of rust, if already present, is promoted and/or attained by conversion of the rust into an irreversible complex compound that will be integrated in the ferrous surface.

In the process particularly a lubricating formulation is used which comprises a semi-aqueous emulsifying composition containing at least 5 per cent by weight, based on the total formulation, of a tannin complex compound. The semi-aqueous emulsifying composition is particularly obtained by emulsifying the tannin complex compound in an oily or oily type basis by means of a phosphated emulsifier. The emulsion can also contain non-phosphated auxiliary emulsifiers. Such a semi-aqueous emulsion is perfectly stable in the original non-metallic packages

used for storage during at least one year.

Subject of the present invention is also a lubricating formulation comprising a semi-aqueous emulsifying composition containing at least 5 per cent by weight, based on the total formulation, of a tannin complex compound, and the use of such a lubrication formulation for simultaneous lubrication, passivation, protection against corrosion and rust-conversion of ferrous surfaces, especially of screws and screw-nuts.

Amongst the materials to be fixed according to the present invention are machines and industrial equipment of any kind, bridges, port-sites, wharves installations and equipment, ships and boats, vehicles of any type, agricultural machines, hydraulic engineering and water-works.

The invention is described in more detail by the following particularities:

The lubrication is effected by means of lubricating substances as components of the lubricating formulation, which are preferably synthetic or semi-synthetic, resistant to oxidation, impermeable and water-repellent and non-saponifiable. They need not but can contain special additives, i. e. "lubricating additives" as commonly used.

For attaining the passivating, anti-corrosive and rust-converting properties a semi-aqueous emulsifying composition is incorporated into the lubricating formulation, which contains a condensed tannin complex, which must correspond, at least, to five per cent by weight of the total formulation. This complex inhibits the corrosion of the ferrous surfaces and attains the conversion

of rust - mainly in the form of $Fe^{3+}$(hexaquo) - into a chelate-complex, i. e. a bis-chelate, with the following assumed formula (cf. A. J. Seavell, Journal of Oil and Color Chemists Association, No. 61, 1978):

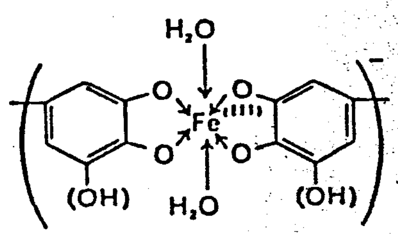

This structure comprises the "iron tannate" formed between the $Fe^{3+}$(hexaquo)-ion of the iron oxide and a condensed tannin complex. In compliance with the same theory it is also possible to assume a redox reaction between $Fe^{3+}$(hexaquo)-ions and acid solutions of a condensed tannin:

$$Fe^{3+} + R\text{-}OH \longrightarrow Fe^{2+}\ ROH \text{ (oxidized radical)}$$

(R = a flavanoid unit, i. e. a structure providing an OH-group in ortho-position).

According to A. J. Seavell (Journal of Oil and Colour Chem. Association, No. 61, 1978) a mono-complex could also undergo a redox process but once formed there is, however, little likelyhood of Fe (III) bis-chelate complex gaining an electron, because it already carries a negative charge, i. e. stabilizes the higher valency state with respect to the lower:

$$(Fe^{(III)}T_2)^- + e^- \not\longrightarrow (Fe^{(II)}T_2)^{2-}$$

T = "chelated tannin"

The emulsion containing the tannin-complex is obtained by starting from a semi-aqueous solution (emulsifying

composition) of the said substance, with the participation of a phosphated emulsifying agent, which also reinforces the passivating action on the ferrous surfaces. Different emulsifiers, e. g. non-phosphated emulsifiers, can be used as auxiliary agents.

According to the invention on the ferrous surfaces a greasy layer can be formed when the water and water-miscible components of the composition necessary for the complex reaction are separated and are slowly evaporated due to the so-called "breaking" of the emulsion. This layer, which is hydrophobic, impermeable and permanently non-drying, involves and fixes the irreversible iron-tannin-chelate and, due to its greasy and insaponifiable properties, offers a permanent protection to the screws and screw-nuts, thus avoiding the disadvantages and troubles caused by the "binding" of the threads and nuts due to oxidation and rust formation.

According to the invention therefore a highly useful lubricating process and formulation is provided, which can also be used for the placing of large gauge screws, both internally and externally, and wherein the formulation has impermeable, isolating and stable properties inherent to the highest grade lubricating substances used and to their oily or greasy character, which allows a great coefficient of surface isolation (mainly in the case of threaded surfaces) against atmospheric agents and weather influence, even in the form of atmospheric moisture, which, combined with oxygen and materials of pollution, are the main factors of corrosion. Screws and screw-nuts protected according to the present invention can also advantageously and efficiently be used to fix wood en parts, remaining a very long time protected against oxidation and corrosion, even if the wood is green or insufficiently dried.

According to the invention simultaneously to the lubricating, impermeabilizing and isolating effects a surface passivation, anti-corrosive properties and irreversible rust conversion is attained. The process and formulation according to the present invention is therefore of major technical and economical interest for a great number of applications in several fields, from building, both civil and military, to ship-building and repair industries, machinery, bridges, water-works and all kinds of vehicles.

Claims:

1. Process for lubricating iron and normal or non-inoxidable steel screws and screw-nuts for fixing any kind of material, especially structures made of ferrous metals, characterized in that together with lubrication passivation and consequent protection against direct contact with the ambient atmosphere and inherent oxidation and corrosion of the thread's or screw's surface and simultaneously conversion of rust is attained by conversion of the rust into an irreversible complex compound that will be integrated in the ferrous surface.

2. Process of claim 1, characterized in that a lubricating formulation is used which comprises a semi-aqueous emulsifying composition containing at least five percent by weight, based on the total formulation, of a tannin complex compound.

3. Process of claim 1 or 2, characterized in that the lubricating formulation (lubricant) contains common lubricating additives.

4. Process of any of the preceding claims, characterized in that the lubricant is based on synthetic or semi-synthetic lubricating substances.

5. Process of any of the preceding claims, characterized in that the emulsifying composition is obtained by emulsifying the tannin complex compound in an oily or oily type basis by means of a phosphated emulsifier.

6. Process of claim 5, characterized in that the emulsifying composition contains non-phosphated auxiliary emulsifiers.

7. Process of any of the preceding claims, characterized in that on the ferrous surface a greasy layer is formed by the separation and evaporation of water and water-miscible components, which contains and fixes the iron-chelate complex.

8. Process of any of the preceding claims, characterized in that the structures to be fixed comprise machines and industrial equipment of any kind, bridges, port-sites, wharves installations and equipment, ships and boats, vehicles of any type, agricultural machines, hydraulic engineering and water-works.

9. Lubricating formulation comprising a semi-aqueous emulsifying composition containing at least five per cent by weight, based on the total formulation, of a tannin complex compound.

10. Lubricating formulation of claim 9, characterized in that it contains common lubricating additives.

11. Lubricating formulation of claim 9 or 10, characterized in that it is based on synthetic or semi-synthetic lubricating substances.

12. Lubricating formulation of any of claims 9 to 11, characterized in that the emulsifying composition is obtained by emulsifying the tannin complex compound in an oily or oily type basis in the presence of a phosphated emulsifier.

13. Lubricating formulation of claim 12, characterized in that the emulsifying composition contains non-phosphated auxiliary emulsifiers.

14. The use of a lubricating formulation according to any of claims 9 to 13 for simultaneous lubrication, passivation, protection against corrosion and rust-conversion of ferrous surfaces, especially screws and screw-nuts.